# EUROPEAN PATENT APPLICATION

(11) **EP 3 716 448 A1**
(43) Date of publication of application: **30.09.2020**
(21) Application number: 19212100.2
(22) Date of filing: 28.11.2019
(51) Int. Cl.: H02K 5/20, H02K 9/19, H02K 9/08

(54) **WINDING END TURN COOLING**

(30) Priority: 25.03.2019 US 201916362944
(71) Applicant: Hamilton Sundstrand Corporation, Charlotte, NC 28217-4578 (US)
(72) Inventor: SPIERLING, Todd A., Byron, IL 61010 (US)
(74) Representative: Dehns

(57) **Abstract**

A cooling arrangement (100) for an electrical machine (102) includes a stator (104) including a stack (106) defining a rotation axis and windings (108) in the stack extending parallel to the rotation axis and forming end windings where the windings wrap around opposing axial ends of the stack. A rotor (116) is included radially inward from the stator, configured to rotate about the rotation axis relative to the stator. An annular cooling jacket (122,124) is included radially outward from the end windings at one axial end of the stack. The cooling jacket is configured to circulate cooling fluid in an internal flow passage therein in a circumferential direction to carry heat away from the end windings.

## Description

### BACKGROUND OF THE INVENTION

### 1. Field of the Invention

The present disclosure relates to electrical machines such as motors and generators, and more particularly to cooling electrical machines.

### 2. Description of Related Art

Losses occur in electrical machines, both in the rotor and stator. Stator losses include iron losses and copper losses. The iron losses and a portion of the copper losses occurring within the stator stack are relatively easy to control by cooling due to the direct conduction path to a surrounding cooling jacket. The copper losses in the end windings are more difficult to remedy by cooling due to the longer heat conduction paths. Oil spray can be used to cool the end windings with impinging coolant, but the tradeoff is increased windage loss, e.g., as the cooling oil creates drag on the rotation of the rotor.

The conventional techniques have been considered satisfactory for their intended purpose. However, there is an ever present need for improved cooling for electrical machines. This disclosure provides a solution for this need.

### SUMMARY OF THE INVENTION

A cooling arrangement for an electrical machine includes a stator including a stack defining a rotation axis and windings in the stack extending parallel to the rotation axis and forming end windings where the windings wrap around opposing axial ends of the stack. A rotor is included radially inward from the stator, configured to rotate about the rotation axis relative to the stator. An annular cooling jacket is included radially outward from the end windings at one axial end of the stack. The cooling jacket is configured to circulate cooling fluid in an internal flow passage therein in a circumferential direction to carry heat away from the end windings.

The annular cooling jacket can include a plurality of circumferentially spaced apart fins extending inward from an inner annular wall thereof. A pump can be connected to the cooling jacket to drive flow of cooling fluid therethrough. Fan features can be included on an axial end of the rotor, radially inward from the end windings and cooling jacket. The fan features can be positioned to drive a flow of cooling air radially outward through the end windings to remove heat from the end windings, and on to the cooling jacket to dump the heat from the end windings into the cooling fluid within the cooling jacket.

The cooling jacket can be a first cooling jacket at a first axial end of the stack. A second annular cooling jacket can be included radially outward from the end windings at a second axial end of the stack opposite the first axial end. The second cooling jacket can be configured to circulate cooling fluid in an internal flow therein in a circumferential direction to carry heat away from the end windings. The second cooling jacket can include a plurality of circumferentially spaced apart fins extending inward from an inner annular wall thereof. A pump can be connected to the second cooling jacket to drive flow of cooling fluid therethrough. Fan features can be included on an axial end of the rotor, radially inward from the end windings and second cooling jacket. The fan features can be positioned to drive a flow of cooling air radially outward through the end windings to remove heat from the end windings, and on to the second cooling jacket to dump the heat from the end windings into the cooling fluid within the second cooling jacket.

A third annular cooling jacket can be included axially between the first and second cooling jackets, radially outward from the stack. The third cooling jacket can include a plurality of circumferential channels configured to circulate cooling fluid therethrough for cooling the stack.

A method of cooling an electrical machine includes urging airflow with a rotor through end windings positioned radially outward of the rotor and transferring heat from the end windings to the airflow. The method includes passing the airflow exiting the end windings toward an annular cooling jacket radially outward from the end windings and transferring heat from the airflow into the cooling jacket, and circulating coolant in an internal flow passage within the cooling jacket in a circumferential direction to carry heat away from the cooling jacket.

Using a rotor to drive airflow, passing the airflow from the end windings, and circulating coolant in an internal flow can be performed at a first axial end of an electrical machine stack. The method can include, at a second axial end of the stack opposite the first end, using a rotor to drive airflow through end windings radially outward from the rotor to remove heat from the end windings into the airflow, passing the airflow from the end windings to an annular cooling jacket radially outward from the end windings to transfer heat from the airflow into the cooling jacket, and circulating coolant in an internal flow within the cooling jacket in a circumferential direction to carry heat away from the cooling jacket. The method can include circulating cooling fluid through a plurality of circumferential channels in a cooling jacket radially outward from the stack between the first and second axial ends of the stack. Cooling of the stack and end windings can be performed without spraying liquid coolant. Cooling of the stack and end windings can be performed without introducing liquid coolant into a stator/rotor gap between the stack and the rotor.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic cross-sectional side-elevation view of an embodiment of a cooling arrangement for an electrical machine constructed in accordance with the present disclosure, showing the three cooling jackets for cooling the end windings and stack;
Fig. 2 is a schematic, cut-away perspective view of one of the cooling jackets for the end windings of Fig. 1, showing the circumferential, internal flow through the cooling jacket; and
Fig. 3 is a schematic axial end view of the jacket of Fig. 2, showing the flow of air from the rotor, through the end windings, and out through the cooling jacket.

### DETAILED DESCRIPTION OF THE PREFERRED EMBODIMENTS

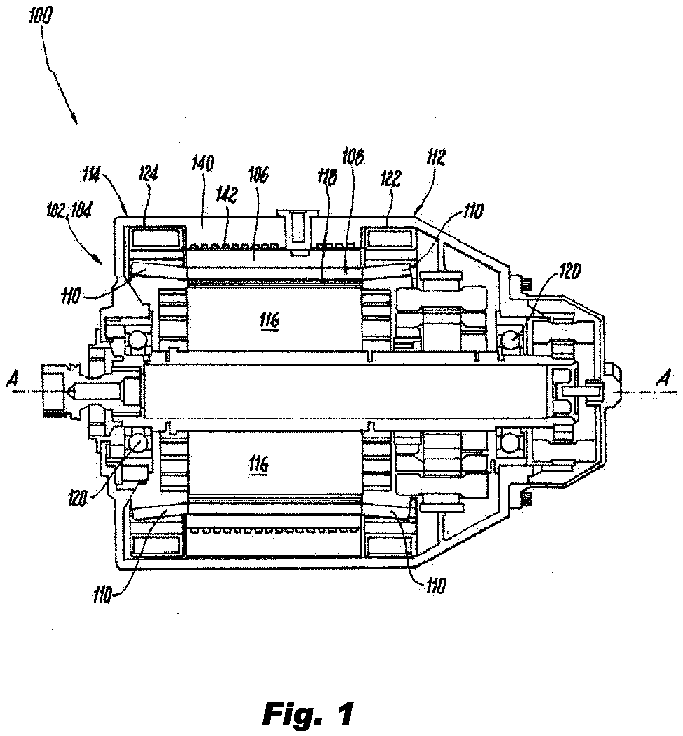

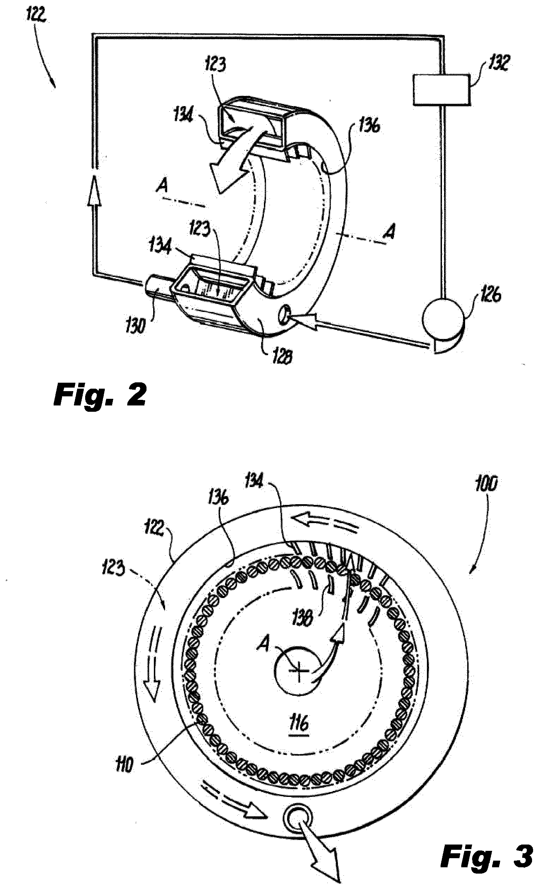

Reference will now be made to the drawings wherein like reference numerals identify similar structural features or aspects of the subject disclosure. For purposes of explanation and illustration, and not limitation, a partial view of an embodiment of a cooling arrangement in accordance with the disclosure is shown in Fig. 1 and is designated generally by reference character 100. Other embodiments of cooling arrangements in accordance with the disclosure, or aspects thereof, are provided in Figs. 2-3, as will be described. The systems and methods described herein can be used for cooling electrical machines including enhanced cooling of the difficult-to-cool end turn region.

The cooling arrangement 100 for an electrical machine 102 includes a stator 104 including a stack 106 defining a rotation axis A. Windings 108 in the stack 106 extend parallel to the rotation axis A and form end windings 110 where the windings 108 wrap around opposing axial ends 112, 114 of the stack 106. A rotor 116 is included radially inward from the stator 104 across a rotor stator air gap 118. The rotor 116 is mounted on bearings 120 for rotation about the rotation axis A relative to the stator 104.

A respective annular cooling jacket 122, 124 is included radially outward from the end windings at each axial end 112, 114 of the stack 106. The cooling jackets are similar, so herein the description of the first cooling jacket 122 shall be considered to apply to the second cooling jacket 124 as well, except that the first and second cooling jackets are arranged at the opposite axial ends 112, 114 of the stack 106.

With reference now to Fig. 2, the cooling jacket 122 is configured to circulate cooling fluid in an internal flow therein in a circumferential direction through the circumferentially oriented flow passage 123, as indicated by the large arrow in Fig. 2, to carry heat away from the end windings 110 that are labeled in Figs 1 and 3. A pump 126 is connected to an inlet 128 of the cooling jacket 122 to drive flow of cooling fluid therethrough. An outlet 130 of the cooling jacket 122 returns cooling fluid from the cooling jacket 122 to a sump or other heat sinking source 132 of cooling fluid, from which the pump draws cooled cooling fluid for circulation through the cooling jacket 122.

Referring now to Fig. 3, the annular cooling jacket 122 includes a plurality of circumferentially spaced apart fins 134 extending inward from an inner annular wall 136 thereof. Fan features such as centripetal vanes 138, are included on each axial end of the rotor 116, radially inward from the end windings 110 and cooling jacket 122, 124. The fan features (e.g., vanes 138) are positioned to drive a flow of cooling air radially outward (as the rotor 116 rotates) through the end windings 110 to remove heat from the end windings 110, and on to the cooling jacket 122 to dump the heat from the air heated by the end windings 110 into the cooling fluid within the cooling jacket 122, which is carried away to the heat sinking source 132 shown in Fig. 2. The flows of air, heat, and coolant fluid are indicated by flow arrows in Fig. 3.

With reference again to Fig. 1, a third annular cooling jacket 140 is included axially between the first and second cooling jackets 122, 124 and radially outward from the stack 106. The third cooling jacket 140 includes a plurality of circumferential channels 142 configured to circulate cooling fluid therethrough for cooling the stack 106 and the portions of the windings 108 that run through the stack 106. All three cooling jackets 122, 124, 140 can be connected to utilize the same pump 126 and heat sinking source 132, or one or more of the cooling jackets 122, 124, 140 can have its own dedicated pump and/or heat sinking source. This allows cooling of the stack 106 and end windings 110 without spraying liquid coolant, and without introducing liquid coolant into the stator/rotor gap 118 between the stack 106 and the rotor 116.

The methods and systems of the present disclosure, as described above and shown in the drawings, provide for cooling electrical machines with superior properties including enhanced cooling of the difficult-to-cool end turn region, potentially allowing the electrical machine to output the maximum power without the need to add additional copper (which would add weight) or spray oil cooling (which would reduce efficiency). While the apparatus and methods of the subject disclosure have been shown and described with reference to preferred embodiments, those skilled in the art will readily appreciate that changes and/or modifications may be made thereto without departing from the scope of the subject disclosure.

## Claims

1. A cooling arrangement (100) for an electrical machine (102) comprising:
a stator (104) including a stack (106) defining a rotation axis and windings (108) in the stack extending parallel to the rotation axis and forming end windings where the windings wrap around opposing axial ends of the stack;
a rotor (116) radially inward from the stator, configured to rotate about the rotation axis relative to the stator; and
an annular cooling jacket (122,124) radially outward from the end windings at one axial end of the stack, wherein the cooling jacket is configured to circulate cooling fluid in an internal flow passage therein in a circumferential direction to carry heat away from the end windings.

2. The arrangement as recited in claim 1, wherein the annular cooling jacket includes a plurality of circumferentially spaced apart fins extending inward from an inner annular wall thereof.

3. The arrangement as recited in claims 1 or 2, further comprising a pump connected to the cooling jacket to drive flow of cooling fluid therethrough.

4. The arrangement as recited in any preceding claim, further comprising fan features on an axial end of the rotor, radially inward from the end windings and cooling jacket, wherein the fan features are positioned to drive a flow of cooling air radially outward through the end windings to remove heat from the end windings, and on to the cooling jacket to dump the heat from the end windings into the cooling fluid within the cooling jacket.

5. The arrangement as recited in any preceding claim, wherein the cooling jacket is a first cooling jacket at a first axial end of the stack and further comprising:
a second annular cooling jacket radially outward from the end windings at a second axial end of the stack opposite the first axial end, wherein the second cooling jacket is configured to circulate cooling fluid in an internal flow therein in a circumferential direction to carry heat away from the end windings.

6. The arrangement as recited in claim 5, wherein the second cooling jacket includes a plurality of circumferentially spaced apart fins extending inward from an inner annular wall thereof.

7. The arrangement as recited in claims 5 or 6, further comprising a pump connected to the second cooling jacket to drive flow of cooling fluid therethrough.

8. The arrangement as recited in any of claims 5 to 7, further comprising fan features on an axial end of the rotor, radially inward from the end windings and second cooling jacket, wherein the fan features are positioned to drive a flow of cooling air radially outward through the end windings to remove heat from the end windings, and on to the second cooling jacket to dump the heat from the end windings into the cooling fluid within the second cooling jacket.

9. The arrangement as recited in any of claims 5 to 8, further comprising a third annular cooling jacket axially between the first and second cooling jackets, radially outward from the stack.

10. The arrangement as recited in claim 9, wherein the third cooling jacket includes a plurality of circumferential channels configured to circulate cooling fluid therethrough for cooling the stack.

11. A method of cooling an electrical machine comprising:
urging airflow with a rotor through end windings positioned radially outward of the rotor;
transferring heat from the end windings to the airflow;
passing the airflow exiting the end windings toward an annular cooling jacket radially outward from the end windings;
transferring heat from the airflow into the cooling jacket; and
circulating coolant in an internal flow passage within the cooling jacket in a circumferential direction to carry heat away from the cooling jacket.

12. The method as recited in claim 11, wherein using a rotor to drive airflow, passing the airflow from the end windings, and circulating coolant in an internal flow are performed at a first axial end of an electrical machine stack, and further comprising, at a second axial end of the stack opposite the first end:
using a rotor to drive airflow through end windings radially outward from the rotor to remove heat from the end windings into the airflow;
passing the airflow from the end windings to an annular cooling jacket radially outward from the end windings to transfer heat from the airflow into the cooling jacket; and
circulating coolant in an internal flow within the cooling jacket in a circumferential direction to carry heat away from the cooling jacket.

13. The method as recited in claim 12, further comprising circulating cooling fluid through a plurality of circumferential channels in a cooling jacket radially outward from the stack between the first and second axial ends of the stack.

14. The method as recited in claim 13, wherein cooling of the stack and end windings is performed without spraying liquid coolant.

15. The method as recited in claim 14, wherein cooling of the stack and end windings is performed without introducing liquid coolant into a stator/rotor gap between the stack and the rotor.
